# EUROPEAN PATENT SPECIFICATION

(11) **EP 4 269 778 B1**
(45) Date of publication and mention of the grant of the patent: **26.03.2025**
(21) Application number: 23164946.8
(22) Date of filing: 29.03.2023
(51) Int. Cl.: F02M 35/12, F02M 35/10, F02M 35/16, B62J 35/00, B62J 40/00, B62K 11/04

(54) **STRADDLED VEHICLE**
GRÄTSCHSITZFAHRZEUG
VÉHICULE À SELLE

(30) Priority: 27.04.2022 JP 2022073621
(43) Date of publication of application: 01.11.2023
(73) Proprietor: Yamaha Hatsudoki Kabushiki Kaisha, Iwata-shi, Shizuoka 438-8501 (JP)
(72) Inventor: ADACHI, Masashi, Iwata-shi, 4388501 (JP)
(74) Representative: Studio Torta S.p.A.

(56) References cited:
- JP-A- 2009 073 287
- JP-A- H06 299 920

## Description

### Technical Field

The present invention relates to a straddled vehicle including an engine and an air cleaner.

### Prior Art

An air cleaner introduces clean air into an engine. During traveling of a straddled vehicle including an engine, an intake sound may be generated from an air cleaner.

### SUMMARY

In a case in which an intake sound generated from the air cleaner gives a rider a feeling of sprinting, the rider can enjoy driving the straddled vehicle by actively hearing the intake sound. Further, in a case in which an intake sound generated from the air cleaner changes in accordance with the work state of the engine, the rider can perform a throttle operation, a handle operation and the like while identifying the work state of the engine by actively hearing the intake sound.

JP 2019-172097 A describes one example of a straddled vehicle in which an air cleaner box is provided rearwardly of an engine. In the straddle vehicle, an intake port is provided in the sidewall of the air cleaner box. Further, a side cover is provided so as to cover the intake port in the sidewall of the air cleaner box from the side of the straddle vehicle. In the side cover, a side cover opening for allowing a rider to hear an intake sound generated from the air cleaner box is formed.

The above-mentioned side cover is located directly below a seat and relatively away from the head of the rider riding the straddled vehicle. Further, the side cover opening is formed so as to be directed sidewardly of the vehicle. Therefore, in regard to the straddled vehicle of JP 2019-172097 A, it is difficult for a driver riding the straddled vehicle to actually hear an intake sound generated from the air cleaner box.

On the other hand, JP 2009-73287 A describes one example of the configuration of a straddled vehicle in which an intake box (air cleaner box) is provided in an upper portion of an engine. In the straddled vehicle, a cover that covers a key cylinder is provided above an air inlet port (intake port) of the intake box. An opening directed upwardly is formed in the cover. With such a configuration, an intake sound generated in the intake port is heard by a rider through the opening of the cover.

JP 2009-73287 A further describes the configuration in which a duct extending from the intake box toward the opening of the cover is provided in order to enhance the effect of collecting an intake sound in the opening of the cover. However, the duct is formed so as to open toward the opening of the cover and communicate with the space above the duct and the space below the duct (the inner space of the air intake box).

Therefore, with the above-mentioned configuration, droplets of rainwater or the like may enter the opening of the cover. Further, a duct filter for capturing dust is provided in the duct. However, the duct filter cannot prevent droplets from flowing into the intake box through the duct.

An object of the present invention is to provide a straddled vehicle that enable a rider to efficiently hear an intake sound of an air cleaner while suppressing entry of a large amount of droplets into the air cleaner.

### Description of the invention

(1) A straddled vehicle according to one aspect of the present invention includes an engine, an air cleaner provided above the engine, a cover provided above the air cleaner so as to overlap with at least part of the air cleaner in a plan view viewed in an up-and-down direction, and a shielding member provided between the air cleaner and the cover, wherein the air cleaner has an intake port which is formed so as to open upwardly and into which air to be supplied to the engine is introduced, the cover has an opening that is formed such that at least part of the opening overlaps with the intake port of the air cleaner in a plan view viewed in the up-and-down direction, the shielding member is configured to prevent droplets from entering the intake port, and at least part of the shielding member overlaps with a common opening region in which the intake port of the air cleaner and the opening of the cover overlaps with each other in a plan view viewed in the up-and-down direction.

In the straddled vehicle, the air cleaner is provided above the engine. The engine provided in the straddled vehicle is located between or in front of both feet of a rider riding the straddled vehicle. Therefore, with the above-mentioned arrangement, the air cleaner is located farther downwardly than the rider's head in a portion of the straddled vehicle that is relatively close to the rider's head.

As described above, the intake port of the air cleaner is opened upwardly. Further, at least part of the opening of the cover overlaps with the intake port of the air cleaner in a plan view. Therefore, during the work of the engine, an intake sound generated in the intake port of the air cleaner is output upwardly of the cover through at least part of the opening of the cover. Therefore, the rider can easily hear an intake sound generated from the air cleaner.

Further, in the above-mentioned straddled vehicle, the shielding member is provided between the air cleaner and the cover such that at least part of the shielding member overlaps with the common opening region in a plan view. In this case, the shielding member reduces further entry of droplets of rainwater or the like, which enters the opening of the cover, into the intake port of the air cleaner.

As a result, it is possible to allow the rider to efficiently hear an intake sound of the air cleaner while suppressing entry of a large amount of droplets into the air cleaner.

(2) At least part of the shielding member may overlap with the entire common opening region in a plan view. In this case, a large portion of droplets entering the space between the cover and the air cleaner through the opening of the cover is received by the shielding member and flows to a region away from the intake port of the air cleaner in a plan view. This prevents droplets of rainwater or the like from entering the intake port of the air cleaner.

(3) The straddled vehicle may further include a fuel tank, wherein the shielding member may be constituted by at least part of the fuel tank.

The fuel tank has a fuel storage space for storing fuel therein. The fuel storage space is included in the portion of the shielding member that overlaps with the common opening region in a plan view. In this case, the fuel storage space of the fuel tank functions as a sound absorber that well absorbs a sound having a specific frequency. Thus, it is possible to reduce the output of a sound having a specific frequency that does not conform with the preference of the rider from the opening of the cover.

Further, the sound absorbing function of the fuel storage space of the fuel tank changes in accordance with the state in the fuel storage space, that is, whether the fuel storage space is filled with fuel. Thus, an intake sound output from the opening of the cover changes in accordance with the state in the fuel storage space. Therefore, the rider can identify the remaining amount of fuel by hearing an intake sound generated from the air cleaner.

(4) The straddled vehicle may further include a fuel tank, and a tank protection member that protects the fuel tank, wherein the shielding member may be constituted by at least part of the fuel tank and the tank protection member.

In this case, because at least part of the fuel tank and the tank protection member is used as the shielding member, it is not necessary to prepare a member for reducing entry of droplets into the air cleaner separately from the fuel tank and the tank protection member. This suppresses an increase in number of components and complication of the configuration.

(5) A sound transmission space that is formed so as to continuously extend from the intake port of the air cleaner to the opening of the cover while bypassing the shielding member may be formed between the air cleaner and the cover.

With the above-mentioned configuration, the cover, the air cleaner and the shielding member form a so-called labyrinth structure that restricts a flow of fluid between the space in the air cleaner and the space above the cover. Thus, the sound transmission space is formed in a zigzag manner between the opening of the cover and the intake port of the air cleaner in a predetermined vertical cross section. Therefore, even in a case in which droplets of rainwater or the like enter the space between the shielding member and the cover from the opening of the cover, further entry of the droplets into the intake port of the air cleaner is reduced. Further, an intake sound generated in the intake port of the air cleaner is output from the opening of the cover through the sound transmission space.

(6) The sound transmission space may include a clearance space located between the cover and the shielding member, a partitioning portion that partitions the clearance space into a first space and a second space may be provided at at least one of the cover and the shielding member, the first space may be a space that communicates with a space above the cover through the opening of the cover, and the second space may be a space excluding the first space in the clearance space.

In this case, when being propagated to the first space, part of an intake sound generated in the intake port of the air cleaner is guided to the opening of the cover without being diffused to the second space in the clearance space. Thus, the volume of the intake sound to be output from the opening of the cover is prevented from being significantly reduced.

(7) A total opening area of the opening of the cover may be equal to or smaller than a total opening area of the intake port of the air cleaner.

The volume of an intake sound output upwardly from the intake port of the air cleaner is referred to as a first sound output volume. The volume of an intake sound output upwardly from the opening of the cover is referred to as a second sound output volume. The first sound output volume is defined in accordance with the total opening area of the intake port of the air cleaner. The second sound output volume is defined in accordance with the total opening area of the opening of the cover.

In the output path of the intake sound of the air cleaner, the intake port of the air cleaner is located at a position farther upstream than the opening of the cover. Therefore, in a case in which the total opening area of the opening of the cover is larger than the total opening area of the intake port of the air cleaner, the volume of an output sound is defined based on not the total opening area of the opening of the cover but the total opening area of the intake port of the air cleaner.

On the other hand, in a case in which the total opening area of the opening of the cover is larger than the total opening area of the intake port of the air cleaner, the volume of an output sound is defined in accordance with the total opening area of the opening of the cover.

Therefore, after the opening area of the intake port of the air cleaner is set such that an amount of air to be supplied to the engine is ensured, the dimension of the opening of the cover can be determined such that the second sound output volume is a desired sound volume.

(8) The opening of the cover may include a first opening and a second opening, each of the first opening and the second opening may be formed such that at least part of each of the first opening and the second opening overlaps with the intake port of the air cleaner in a plan view, the shielding member may be configured to overlap with at least part of the first opening of the cover in a plan view and may be configured to overlap with at least part of the second opening of the cover in a plan view.

In this case, flexibility in layout of the opening in the cover is improved. Thus, it is possible to allow a rider to identify an intake sound more efficiently by providing the first opening and the second opening in order for the rider to hear the intake sound easily.

Other features, elements, characteristics, and advantages of the present disclosure will become more apparent from the following description of preferred embodiments of the present disclosure with reference to the attached drawings.

### Brief description of the drawings

Fig. 1 is a side view of a motorcycle according to one embodiment of the present invention;
Fig. 2 is a plan view of an air cleaner of Fig. 1;
Fig. 3 is a plan view showing a fuel tank being provided on the air cleaner of Fig. 2;
Fig. 4 is a plan view showing a tank protection member being attached to the fuel tank of Fig. 3;
Fig. 5 is a plan view showing an upper cover being attached onto the fuel tank of Fig. 4;
Fig. 6 is a schematic cross sectional view of an upper surface portion of the air cleaner and its peripheral members taken along the line M-M in Fig. 5; and
Fig. 7 is a schematic cross sectional view of the upper surface portion of the air cleaner and its peripheral members taken along the line N-N in Fig. 6.

### Embodiments of the invention

A straddled vehicle according to one embodiment of the present invention will be described below with reference to the drawings. A motorcycle will be described as one example of the straddled vehicle.

### <1> Schematic Configuration of Motorcycle

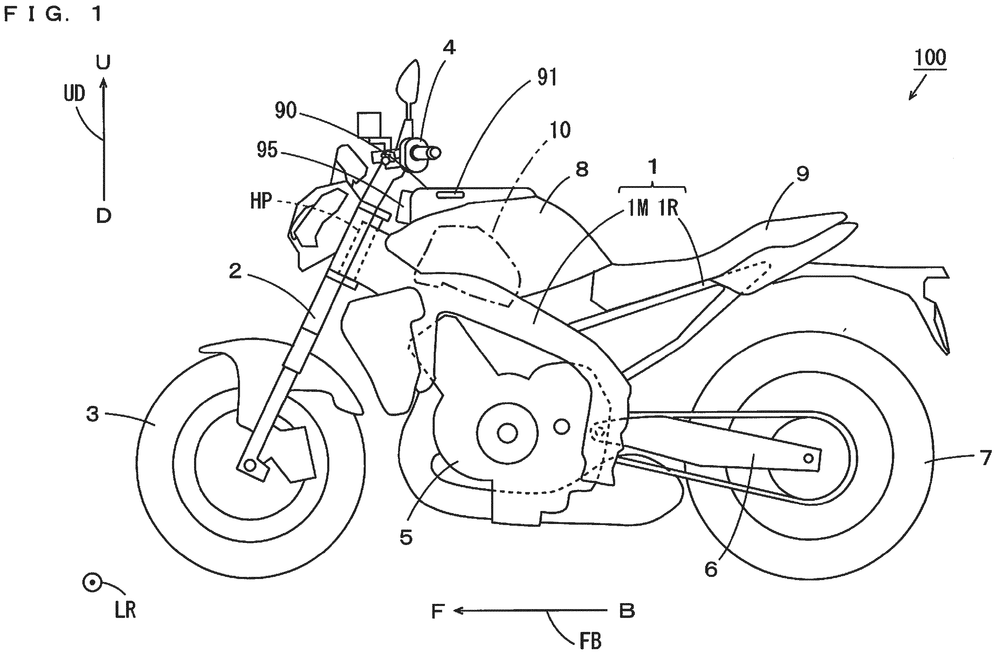

Fig. 1 is a side view of a motorcycle 100 according to one embodiment of the present invention. In Fig. 1, the motorcycle 100 standing up to be perpendicular to the road surface is shown. In each of Fig. 1 and subsequent given diagrams, a front-and-rear direction FB, a left-and-right direction LR and an up-and-down direction UD of the motorcycle 100 are suitably indicated by the arrows. The direction in which the arrow is directed in the front-and-rear direction FB is referred to as forward, and its opposite direction is referred to as rearward. Further, the direction in which the arrow is directed in the left-and-right direction LR is referred to as leftward, and its opposite direction is referred to as rightward. Further, the direction in which the arrow is directed in the up-and-down direction UD is referred to as upward, and its opposite direction is referred to as downward. Further, in each of Fig. 1 and subsequent given diagrams, reference characters F, B, L, R, U and D shown together with the arrows indicating directions indicate forward, rearward, leftward, rightward, upward and downward, respectively.

The motorcycle 100 of Fig. 1 includes a metallic body frame 1. The body frame 1 includes a main frame 1M and a rear frame 1R. The front end portion of the main frame 1M constitutes a head pipe HP. The main frame 1M is formed to extend rearwardly and downwardly from the head pipe HP. The rear frame 1R is attached to the main frame 1M so as to extend rearwardly and slightly upwardly from the rear end portion of the main frame 1M and its vicinity.

A front fork 2 is provided at the head pipe HP to be rotatable about the center axis of the head pipe HP. A front wheel 3 is rotatably supported at the lower end portion of the front fork 2. A handle 4 is provided at the upper end portion of the front fork 2.

The main frame 1M supports an engine 5 at a position farther downward than the head pipe HP. An air cleaner 10 and a fuel tank 8 are provided to be located upwardly of the engine 5 and rearwardly of the head pipe HP. The air cleaner 10 and the fuel tank 8 are supported by the main frame 1M and at least part of the air cleaner 10 and the fuel tank 8 is located above the main frame 1M.

Part of the fuel tank 8 is located above the air cleaner 10. An upper cover 90 is attached to the fuel tank 8 so as to cover part of the air cleaner 10 and part of the fuel tank 8 from above. A pair of left and right cover openings 91 is formed in the upper cover 90. In Fig. 1, only the left cover opening 91 of the pair of cover openings 91 is shown. A key cylinder 95 is provided to be adjacent to the front end portion of the upper cover 90. The key cylinder 95 is supported at the main frame 1M. A seat 9 is provided rearwardly of the fuel tank 8. The seat 9 is mainly supported by the rear frame 1R and located above the rear frame 1R.

A rear arm 6 is provided to extend rearwardly from a lower portion at the rear end of the main frame 1M. The rear arm 6 is supported at the main frame 1M via a pivot shaft. A rear wheel 7 is rotatably supported at the rear end portion of the rear arm 6. The rear wheel 7 is rotated as a drive wheel by the motive power generated from the engine 5.

The air cleaner 10 is mainly constituted by an air cleaner case and a filter element (not shown). The filter element is provided in the air cleaner case. During traveling of the motorcycle 100, air outside of the motorcycle 100 is guided to the inner space of the air cleaner case, and is supplied to the engine 5 while being cleaned by the filter element.

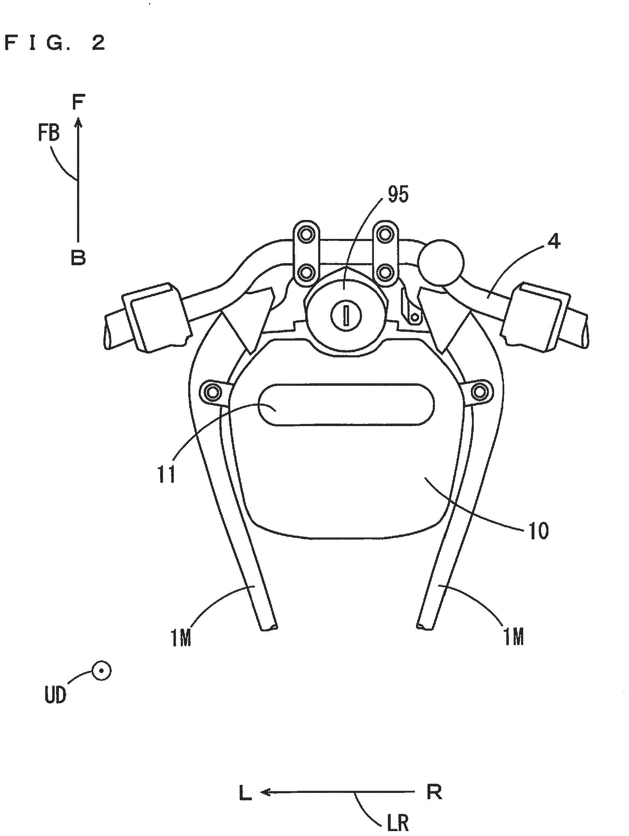

The air cleaner 10 has an intake port 11 (see Fig. 2, described below) into which air to be supplied to the engine 5 is introduced. When air outside of the motorcycle 100 is introduced into the intake port 11 of the air cleaner 10, an intake sound is generated. In a case in which an intake sound is an intake sound that gives a rider the feeling of sprinting, the rider can enjoy driving the motorcycle 100 by hearing the intake sound. Further, in a case in which an intake sound changes in accordance with the work state of the engine, the driver can identify the work state of the engine by hearing the intake sound.

As such, in the motorcycle 100 according to the present embodiment, in order to allow the rider to efficiently hear an intake sound generated from the air cleaner 10, the configurations of the air cleaner 10 and its peripheral members are devised. The configurations of the air cleaner 10 and its peripheral members will be described below in detail.

### <2> Configurations of Air Cleaner 10 and Its Peripheral Members

### (1) Air Cleaner 10

Fig. 2 is a plan view of the air cleaner 10 of Fig. 1. In Fig. 2, the air cleaner 10 of Fig. 1 being attached to the main frame 1M is shown. Further, Fig. 2 shows the key cylinder 95 and the handle 4 of Fig. 1 together with the air cleaner 10. As shown in Fig. 2, the air cleaner 10 has the intake port 11. The intake port 11 is formed so as to open upwardly. Further, the intake port 11 of the present example is located in the vicinity of the front end portion of the air cleaner 10 and extends in the left-and-right direction LR of the motorcycle 100 while having a substantially constant width in a plan view.

### (2) Fuel Tank 8

When the motorcycle 100 of Fig. 1 is assembled, the fuel tank 8 is attached to the main frame 1M so as to cover a large portion of the air cleaner 10 from above with the air cleaner 10 being attached to the main frame 1M.

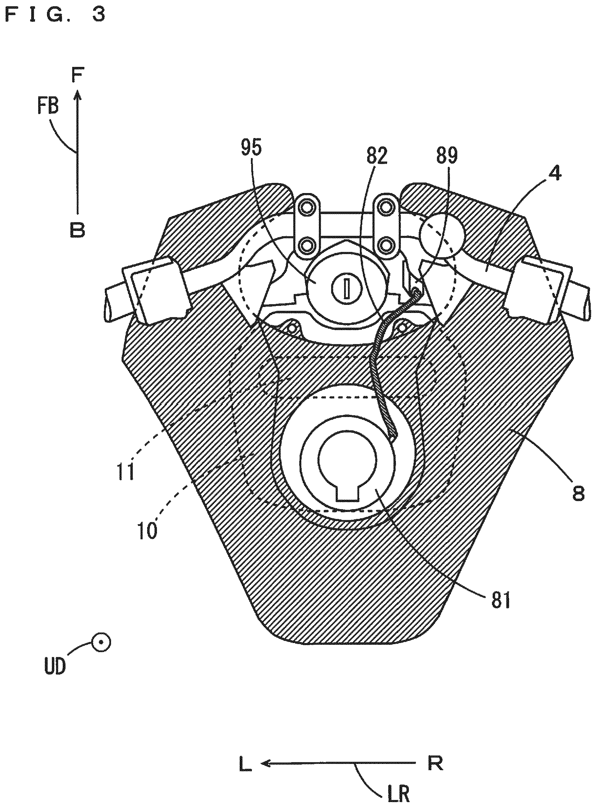

Fig. 3 is a plan view showing the fuel tank 8 being provided on the air cleaner 10 of Fig. 2. In Fig. 3, hatching is applied to the fuel tank 8 in order to facilitate understanding of the shape of the fuel tank 8. As shown in Fig. 3, the fuel tank 8 of the present example covers a large portion of the air cleaner 10 from above except for the front end portion of the air cleaner 10 in a plan view. Further, the fuel tank 8 overlaps with the entire intake port 11 of the air cleaner 10 in a plan view. Further, a fuel cap 81 is provided at the substantially central portion of the upper surface of the fuel tank 8.

One end portion of a harness 82 is connected to part of the fuel cap 81. The other end portion of the harness 82 is connected to a harness connecting portion 89 provided in the vicinity of the key cylinder 95. Part of the harness 82 overlaps with part of the fuel tank 8 in a plan view. While being connected to the fuel cap 81 and the connecting portion 89, the harness 82 is provided with a play for ensuring easiness of attachment and detachment work and ensuring stability of the connection state. Further, the harness 82 is flexible. Therefore, during traveling of the motorcycle 100, when the harness 82 swings with the harness 82 and the fuel tank 8 being in contact with each other, part of the surface of the fuel tank 8 may wear due to the contact with the harness 82.

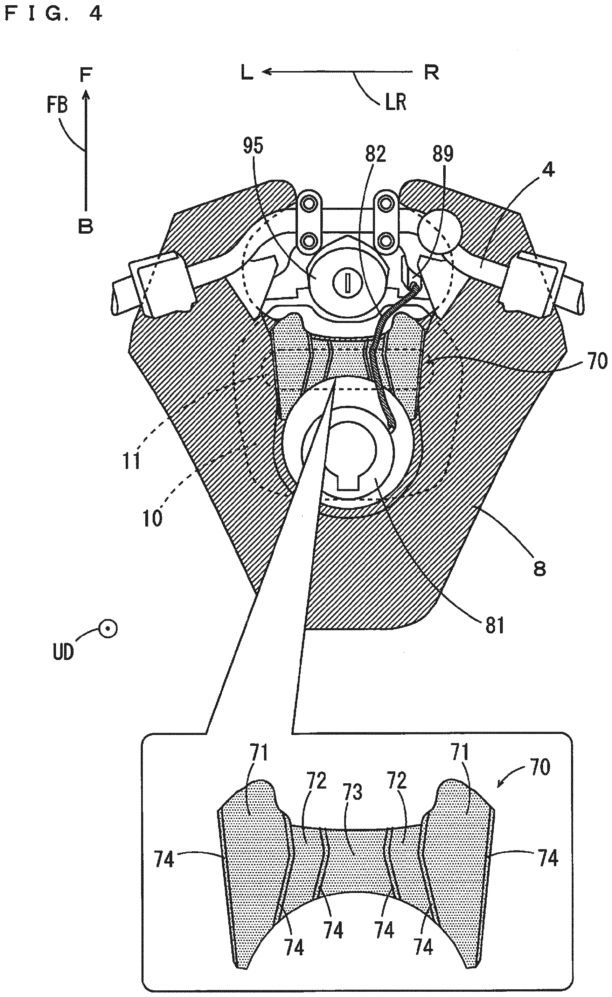

As such, in the present embodiment, a tank protection member 70 (see Fig. 4, described below) is attached to the fuel tank 8 in order to prevent the contact between the fuel tank 8 and the harness 82. The tank protection member 70 covers part of the upper surface of the fuel tank 8.

### (3) Tank Protection Member 70

Fig. 4 is a plan view showing the tank protection member 70 being attached to the fuel tank 8 of Fig. 3. In Fig. 4, in order to facilitate understanding of the shapes of the fuel tank 8 and the tank protection member 70, hatching is applied to the fuel tank 8, and a dotted pattern is applied to the tank protection member 70. Further, in Fig. 4, an enlarged plan view of the tank protection member 70 is shown in the balloon.

As shown in Fig. 4, the tank protection member 70 of the present example is provided so as to overlap with a portion of the upper surface of the fuel tank 8 located forwardly of the fuel cap 81 and be located between the fuel tank 8 and the harness 82 in a plan view.

Further, the tank protection member 70 is a substantially plate-shaped single member formed of resin having relatively high rigidity, and has a pair of left and right sound transmission portions 71, a pair of left and right wire holding portions 72 and a coupling portion 73. The pair of wire holding portions 72 is arranged at the left and right of the coupling portion 73. Each wire holding portion 72 is adjacent to the coupling portion 73. The pair of sound transmission portions 71 are arranged at the left and right of the pair of wire holding portions 72. The right sound transmission portion 71 is adjacent to the right wire holding portion 72, and the left sound transmission portion 71 is adjacent to the left wire holding portion 72.

The pair of sound transmission portions 71, the pair of wire holding portions 72 and the coupling portion 73 of the present example have substantially flat upper surfaces. The upper surface of each of the pair of sound transmission portions 71, the pair of wiring holding portions 72 and the coupling portion 73 may have a mildly bent shape or a mildly curved shape.

In the tank protection member 70, a partitioning portion 74 is formed at the left edge portion of the left sound transmission portion 71. A partitioning portion 74 is also formed between the left sound transmission portion 71 and the left wire holding portion 72. A partitioning portion 74 is also formed between the left wire holding portion 72 and the coupling portion 73. A partitioning portion 74 is also formed between the coupling portion 73 and the right wire holding portion 72. A partitioning portion 74 is also formed between the right wire holding portion 72 and the left sound transmission portion 71. Further, a partitioning portion 74 is formed at the right edge portion of the right sound transmission portion 71.

Each partitioning portion 74 is formed so as to project upwardly from the upper surfaces of the pair of sound transmission portions 71, the pair of wire holding portions 72 and the coupling portion 73 by a predetermined height and extend in the front-and-rear direction FB. Thus, in the tank protection member 70, a plurality of groove portions that open upwardly and extend in the front-and-rear direction FB with the pair of sound transmission portions 71, the pair of wire holding portions 72 and the coupling portion 73 as bottom portions are formed.

With the tank protection member 70 attached to the fuel tank 8, part of the above-mentioned harness 82 is contained in the groove portion having the right wire holding portion 72 of the tank protection member 70 as the bottom portion. Further, the tank protection member 70 overlaps with a large portion of the intake port 11 of the air cleaner 10 in a plan view. Further, the pair of sound transmission portions 71 of the tank protection member 70 extends in the front-and-rear direction FB so as to cross the intake port 11 extending in the left-and-right direction LR in a plan view.

### (4) Upper Cover 90

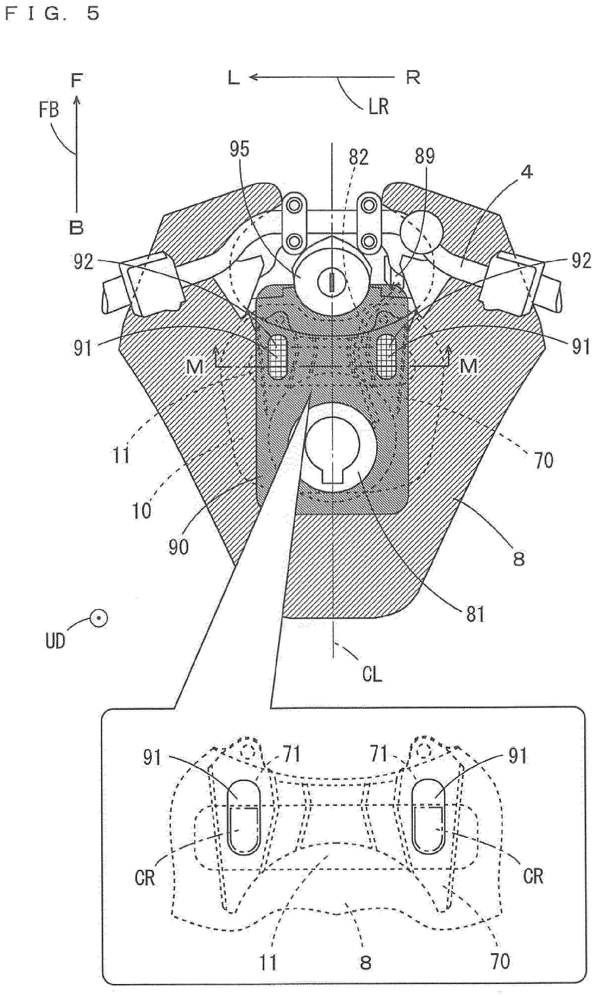

The upper cover 90 of Fig. 1 is attached onto the fuel tank 8 to which the tank protection member 70 is attached. Fig. 5 is a plan view showing the upper cover 90 being attached onto the fuel tank 8 of Fig. 4. In Fig. 5, the hatching patterns that are different from each other are applied to the fuel tank 8 and the upper cover 90 in order to facilitate understanding of the shapes of the fuel tank 8 and the upper cover 90. Further, in Fig. 5, the enlarged plan view showing the positional relationship among the intake port 11 of the air cleaner 10, the fuel tank 8, the tank protection member 70 and the cover opening 91 of the upper cover 90 is shown in the balloon.

As shown in Fig. 5, the upper cover 90 of the present example surrounds the center portion of the fuel cap 81 of the fuel tank 8 in a plan view. Further, the upper cover 90 extends in the front-and-rear direction FB between the fuel cap 81 and the key cylinder 95. The front half portion of the upper cover 90 overlaps with a portion of the air cleaner 10, a portion of the fuel tank 8 and the entire tank protection member 70 in a plan view.

The pair of above-mentioned cover openings 91 is formed in the front half portion of the upper cover 90. The pair of cover openings 91 is symmetrical with respect to a vehicle central axis CL in a plan view. The vehicle central axis CL of Fig. 5 is a virtual straight line extending in the front-and-rear direction FB through the center of the motorcycle 100 of Fig. 1 in the left-and-right direction LR. Each of the pair of cover openings 91 is formed to open upwardly or obliquely upwardly and extend in the front-and-rear direction FB. In the present embodiment, the pair of cover openings 91 is formed such that the sum of the opening areas of the pair of cover openings 91 is equal to or smaller than the opening area of the intake port 11 of the air cleaner 10.

The opening area of one cover opening 91 is the area of the region surrounded by the inner edge of the cover opening 91 when the one cover opening 91 is viewed in a direction in which the cover opening 91 opens. Further, the opening area of the intake port 11 is the area of the region surrounded by the inner edge of the intake port 11 when the intake port 11 is viewed in a direction in which the intake port 11 opens.

A wire mesh 92 is provided in each cover opening 91. The wire mesh 92 suppresses entry of dust floating outside of the motorcycle 100 into the space below the upper cover 90 through the cover opening 91.

As shown in the balloon of Fig. 5, part of each cover opening 91 of the upper cover 90 overlaps with the intake port 11 of the air cleaner 10 in a plan view. Here, the region in which each cover opening 91 of the upper cover 90 and the intake port 11 of the air cleaner 10 overlap with each other in a plan view is referred to as a common opening region CR.

Each of the fuel tank 8 and the tank protection member 70 according to the present embodiment is arranged so as to overlap with the entire common opening regions CR in a plan view. This prevents the intake port 11 of the air cleaner 10 from being exposed to the space above the upper cover 90 (outside of the motorcycle 100). Therefore, even when entering the space below the upper cover 90 from the pair of cover openings 91, droplets of rainwater or the like are prevented from further directly entering into the intake port 11 of the air cleaner 10.

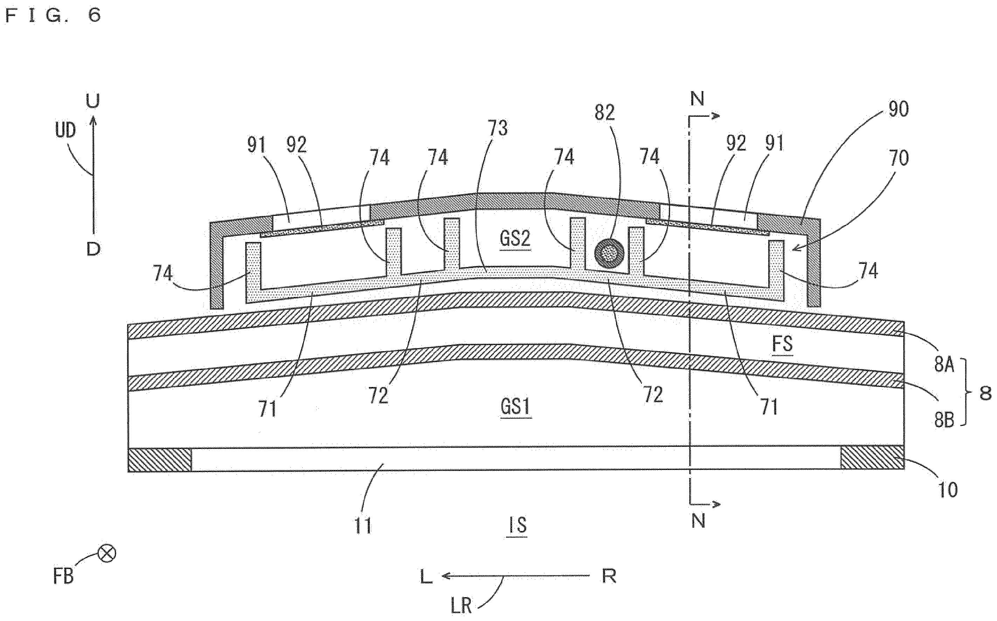

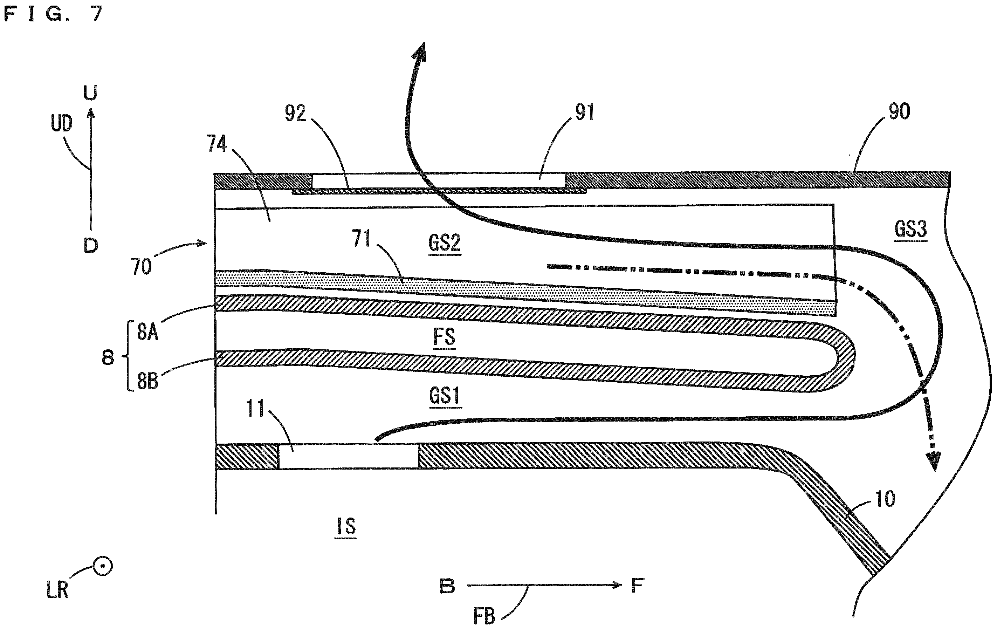

Fig. 6 is a schematic cross sectional view of the upper surface portion of the air cleaner 10 and its peripheral members taken along the line M-M of Fig. 5. Fig. 7 is a schematic cross sectional view of the upper surface portion of the air cleaner 10 and its peripheral members taken along the line N-N of Fig. 6. As shown in Fig. 6, a first clearance space GS1 is formed between the air cleaner 10 and the fuel tank 8. The first clearance space GS1 has a height of several millimeters to several centimeters and communicates with the inner space IS of the air cleaner 10 through the intake port 11 of the air cleaner 10.

On the other hand, a second clearance space GS2 is formed between the tank protection member 70 and the upper cover 90. The second clearance space GS2 has a height of several millimeters to several centimeters and communicates with the space above the upper cover 90 through the cover opening 91 of the upper cover 90.

As described above, the tank protection member 70 includes the plurality of partitioning portions 74 that project upwardly. Thus, the second clearance space GS2 is partitioned into a plurality of spaces respectively corresponding to the pair of sound transmission portions 71, the pair of wire holding portions 72 and the coupling portion 73 of the tank protection member 70 by the plurality of partitioning portions 74. In the present example, as described above, the harness 82 is contained in the space corresponding to the right wire holding portion 72 in the second clearance space GS2. The harness 82 is not contained in the space corresponding to the left wire holding portion 72 in the second clearance space GS2.

A clearance space is formed between the fuel tank 8 and the tank protection member 70 as well as between the air cleaner 10 and the fuel tank 8 and between the tank protection member 70 and the upper cover 90. However, the clearance space between the fuel tank 8 and the tank protection member 70 is negligibly smaller than the first clearance space GS1 and the second clearance space GS2.

The portion of the fuel tank 8 that overlaps with the intake port 11 of the air cleaner 10 in a plan view includes a tank upper surface portion 8A and a tank lower surface portion 8B. A fuel storage space FS for storing fuel is formed between the tank upper surface portion 8A and the tank lower surface portion 8B.

As shown in Fig. 7, a communication space GS3 is formed between the air cleaner 10 and the upper cover 90 at a position farther forward than the front end portion of the fuel tank 8 and the front end portion of the tank protection member 70 to cause the first clearance space GS1 and the second clearance space GS2 to communicate with each other.

The first clearance space GS1, the second clearance space GS2 and the communication space GS3 form a continuous space that extends continuously from the intake port 11 of the air cleaner 10 to the pair of cover openings 91 of the upper cover 90 while bypassing the fuel tank 8 and the tank protection member 70. The continuous space functions as a sound transmission space that transmits an intake sound output upwardly from the intake port 11 of the air cleaner 10 to the pair of cover openings 91 of the upper cover 90. Therefore, during traveling of the motorcycle 100, as indicated by the thick solid arrow in Fig. 7, the intake sound output from the intake port 11 is efficiently output upwardly of the upper cover 90 from the pair of cover openings 91 through the first clearance space GS1, the communication space GS3 and the second clearance space GS2.

Here, as shown in Figs. 5 and 6, in regard to each of the pair of cover openings 91 of the upper cover 90, the entire cover opening 91 overlaps with the sound transmission portion 71 of the tank protection member 70 in a plan view. Further, as described above, the second clearance space GS2 is partitioned into the plurality of spaces by the plurality of partitioning portions 74 of the tank protection member 70.

In this case, when being propagated to the space corresponding to the pair of sound transmission portions 71 of the tank protection member 70 in the second clearance space GS2, part of an intake sound is guided to the pair of cover openings 91 of the upper cover 90 without being diffused in the second clearance space GS2. Thus, the volume of the intake sound output from the pair of cover openings 91 of the upper cover 90 is prevented from being significantly reduced.

In particular, in the above-mentioned tank protection member 70, the distance between the two partitioning portions 74 for partitioning the space corresponding to each of the pair of sound transmission portions 71, in the left-and-right direction LR, gradually decreases rearwardly from the front end portion of the tank protection member 70 (see the plan view in the balloon of Fig. 4). Therefore, in the second clearance space GS2, the two partitioning portions 74 forming the space corresponding to each of the pair of sound transmission portions 71 collect a sound transmitted from the first clearance space GS1 through the communication space GS3 in the cover opening 91. Thus, in the cover opening 91, an intake sound is output more efficiently.

As shown in Fig. 6, the upper surface of the left sound transmission portion 71 of the tank protection member 70 is inclined so as to be directed obliquely downwardly from the right to the left. Further, the upper surface of the right sound transmission portion 71 of the tank protection member 70 is inclined so as to be directed obliquely downwardly from the left to the right. Further, as shown in Fig. 7, the upper surfaces of the left and right sound transmission portions 71 of the tank protection member 70 are inclined so as to be directed obliquely downwardly from the rear to the front. With such a configuration, even in a case in which droplets enter the second clearance space GS2 through the cover opening 91, the entered droplets are smoothly guided to a region away from the intake port 11 via the sound transmission portion 71, as indicated by the thick two-dots and dash arrow in Fig. 7.

### <3> Effects

(a) As described above, in the motorcycle 100 according to the present embodiment, the air cleaner 10 is provided above the engine 5. The engine 5 is located between or in front of both feet of a rider riding the motorcycle 100. Therefore, with the above-mentioned arrangement, the air cleaner 10 is located at a position relatively close to and lower than the rider's head in the motorcycle 100.

The intake port 11 of the air cleaner 10 is opened upwardly. Further, at least part of the pair of cover openings 91 of the upper cover 90 overlaps with the intake port 11 of the air cleaner 10 in a plan view. Therefore, during traveling of the motorcycle 100, an intake sound generated in the intake port 11 of the air cleaner 10 is output upwardly of the upper cover 90 through at least part of the pair of cover openings 91 of the upper cover 90. Therefore, the rider easily hears the intake sound generated in the air cleaner 10.

Further, in the above-mentioned motorcycle 100, the fuel tank 8 and the tank protection member 70 are provided between the air cleaner 10 and the upper cover 90 so as to overlap with the entire common opening regions CR in a plan view. In this case, the fuel tank 8 and the tank protection member 70 receive a large portion of droplets of rainwater or the like entering from the pair of cover openings 91 of the upper cover 90, and cause the received droplets to flow to the region away from the intake port 11 of the air cleaner 10. This prevents droplets from entering the intake port 11 of the air cleaner 10.

As a result, it is possible to allow the rider to efficiently hear the intake sound of the air cleaner 10 while suppressing entry of a large amount of droplets into the air cleaner 10.

(b) As described above, the fuel tank 8 has the fuel storage space FS. The fuel storage space FS is included in the portion of the fuel tank 8 that overlaps with the common opening region CR in a plan view. In this case, the fuel storage space FS functions as a sound absorber that well absorbs the sound having a specific frequency. Thus, it is possible to reduce the output of the sound having a specific frequency that does not conform with the preference of the rider from the pair of cover openings 91 of the upper cover 90.

Further, the sound absorbing function of the common opening regions CR changes according to the state of the inner space of the fuel tank 8 that overlaps with the common opening regions CR, that is, whether the fuel tank 8 is filled with fuel. Thus, the intake sound that is output from the pair of cover openings 91 of the upper cover 90 changes in accordance with the state in the common opening regions CR. Therefore, the rider can identify the remaining amount of fuel by hearing the intake sound.

(c) As described above, the fuel tank 8 and the tank protection member 70 are used as shielding members for preventing droplets entering the pair of cover openings 91 of the upper cover 90 from entering the intake port 11 of the air cleaner 10. Thus, it is not necessary to prepare a member for reducing the entry of droplets into the air cleaner 10 separately from the fuel tank 8 and the tank protection member 70. This suppresses an increase in number of components and complication of the configuration.

(d) As described above, the continuous space including the first clearance space GS1, the second clearance space GS2 and the communication space GS3 is formed between the air cleaner 10 and the upper cover 90. The air cleaner 10, the fuel tank 8, the tank protection member 70 and the upper cover 90 forming the continuous space form a so-called labyrinth structure that restricts a flow of fluid between the inner space IS of the air cleaner 10 and the space above the upper cover 90. Thus, the above-mentioned continuous space continuously extends from the intake port 11 to the pair of cover openings 91 while bypassing the fuel tank 8 and the tank protection member 70. In other words, the above-mentioned continuous space is formed in a zigzag manner in the up-and-down direction UD from the intake port 11 to the pair of cover openings 91.

Therefore, even in a case in which droplets of rain water or the like enter the pair of cover openings 91 of the upper cover 90, further entry of the droplets into the intake port 11 of the air cleaner 10 is reduced. Further, an intake sound generated in the intake port 11 of the air cleaner 10 is output from the pair of cover openings 91 of the upper cover 90.

(e) The volume of an intake sound output from the intake port 11 of the air cleaner 10 toward the first clearance space GS1 is referred to as a first sound output volume. Further, the volume of an intake sound output upwardly from the pair of cover openings 91 of the upper cover 90 is referred to as a second sound output volume. The first sound output volume is defined in accordance with the opening area of the intake port 11 of the air cleaner 10. The second sound output volume is defined in accordance with the sum of the opening areas of the pair of cover openings 91 of the upper cover 90.

In the output path of an intake sound of the air cleaner 10, the intake port 11 of the air cleaner 10 is located at a position farther upstream than the pair of cover openings 91 of the upper cover 90. Therefore, in a case in which the sum of the opening areas of the pair of cover openings 91 is larger than the opening area of the intake port 11, the volume of the output sound is defined based on not the sum of the opening areas of the pair of intake ports 11 but the opening area of the intake port 11.

On the other hand, in a case in which the sum of the opening areas of the pair of cover openings 91 is equal to or smaller than the opening area of the intake port 11, the volume of the output sound is defined in accordance with the sum of the opening areas of the pair of cover openings 91.

In the motorcycle 100 according to the present embodiment, the sum of the opening areas of the pair of cover openings 91 in a plan view is equal to or smaller than the opening area of the intake port 11 of the air cleaner 10 in a plan view, as described above. Therefore, after the opening area of the intake port 11 of the air cleaner 10 is set such that an amount of air to be supplied to the engine 5 is ensured, the dimensions of the pair of cover openings 91 of the upper cover 90 can be determined such that the second sound output volume is a desired sound volume.

(f) In the upper cover 90 according to the present embodiment, the pair of cover openings 91 from which an intake sound can be output is formed. Therefore, when the size and positions of the pair of cover openings 91 are defined such that a rider easily hears an intake sound, the rider can more efficiently identify the intake sound.

### <4> Other Embodiments

(a) While each of the fuel tank 8 and the tank protection member 70 according to the above-mentioned embodiment overlaps with the entire common opening region CR in a plan view, the present invention is not limited to this. Each of the fuel tank 8 and the tank protection member 70 may overlap with part of the common opening region CR. Also in this case, it is possible to reduce entry of droplets such as rainwater into the air cleaner 10 from the intake port 11 as compared to a case in which each of the fuel tank 8 and the tank protection member 70 does not at all overlap with the common opening region CR in a plan view.
(b) While each of the fuel tank 8 and the tank protection member 70 according to the above-mentioned embodiment overlaps with the entire common opening region CR in a plan view, the present invention is not limited to this. In a case in which another member that overlaps with at least part of the common opening region CR in a plan view is present, each of the fuel tank 8 and the tank protection member 70 does not have to overlap with the common opening region CR. In this case, because the other member overlaps with at least part of the common opening region CR in a plan view, it is possible to reduce entry of droplets of rainwater or the like into the air cleaner 10 from the intake port 11 as compared to a case in which the entire common opening region CR is opened upwardly.

The above-mentioned other member may be a member fabricated only for the purpose of reducing entry of droplets into the air cleaner 10, or may be a member that is fabricated to cover members around the key cylinder 95.

(c) While the fuel tank 8 according to the above-mentioned embodiment overlaps with the entire common opening region CR in a plan view, the present invention is not limited to this. The fuel tank 8 does not have to overlap with the common opening region CR in a plan view.

Also in this case, the tank protection member 70 overlaps with at least part of the common opening region CR in a plan view. Thus, it is possible to reduce entry of droplets of rainwater or the like into the air cleaner 10 from the intake port 11 as compared to a case in which the fuel tank 8 and the tank protection member 70 do not at all overlap with the common opening region CR in a plan view.

(d) While the tank protection member 70 according to the above-mentioned embodiment overlaps with the entire common opening region CR in a plan view, the present invention is not limited to this. The tank protection member 70 does not have to overlap with the common opening region CR in a plan view. Alternatively, in a case in which the harness 82 is not provided, the tank protection member 70 does not have to be provided.

Also in these cases, the fuel tank 8 overlaps with at least part of the common opening region CR in a plan view. Thus, it is possible to reduce entry of droplets of rainwater or the like into the air cleaner 10 from the intake port 11 as compared to a case in which the fuel tank 8 and the tank protection member 70 do not at all overlap with the common opening region CR in a plan view.

(e) While the pair of cover openings 91 is formed in the upper cover 90 according to the above-mentioned embodiment, the present invention is not limited to this. Only one cover opening 91 may be formed in the upper cover 90.

(f) While the only one intake port 11 is formed in the air cleaner 10 according to the above-mentioned embodiment, the present invention is not limited to this. Two or more intake ports 11 directed upwardly may be formed in the air cleaner 10. In this case, the pair of cover openings 91 is formed such that the sum of the opening areas of the pair of cover openings 91 is equal to or smaller than the sum of the opening areas of the plurality of intake ports 11 of the air cleaner 10.

(g) While the plurality of partitioning portions 74 are formed in the tank protection member 70 according to the above-mentioned embodiment, the present invention is not limited to this. The plurality of partitioning portions 74 do not have to be formed in the tank protection member 70.

In this case, the plurality of partitioning portions 74 may be formed integrally with the upper cover 90 such that the second clearance space GS2 is partitioned into a plurality of spaces. Alternatively, the partitioning portions 74 may be provided in the second clearance space GS2 separately from the tank protection member 70 and the upper cover 90.

(h) While the above-mentioned embodiment is an example in which the present invention is applied to a motorcycle, the present invention is not limited to this. The present invention may be applied to another straddled vehicle such as a four-wheeled vehicle, a motor tricycle or an ATV (All Terrain Vehicle).

## Claims

1. A straddled vehicle (100) comprising:
an engine (5);
an air cleaner (10) provided above the engine (5);
a cover (90) provided above the air cleaner (10) so as to overlap with at least part of the air cleaner (10) in a plan view viewed in an up-and-down direction;
wherein
the air cleaner (10) has an intake port (11) which is formed so as to open upwardly and into which air to be supplied to the engine (5) is introduced,
the cover (90) has an opening (91) that is formed such that at least part of the opening (91) overlaps with the intake port (11) of the air cleaner (10) in a plan view viewed in the up-and-down direction,
**characterized in that**
a shielding member (8, 70) is provided between the air cleaner (10) and the cover (90), the shielding member is configured to prevent droplets from entering the intake port, and
at least part of the shielding member (8, 70) overlaps with a common opening region (CR) in which the intake port (11) of the air cleaner (10) and the opening (91) of the cover (90) overlap with each other in a plan view viewed in the up-and-down direction.

2. The straddled vehicle according to claim 1, wherein
at least part of the shielding member (8, 70) overlaps with the entire common opening region (CR) in a plan view.

3. The straddled vehicle according to claim 1 or 2, further comprising
a fuel tank (8), wherein
the shielding member (8, 70) is constituted by at least part of the fuel tank (8).

4. The straddled vehicle according to claim 1 or 2, further comprising:
a fuel tank (8); and
a tank protection member (70) that protects the fuel tank (8), wherein
the shielding member (8, 70) is constituted by at least part of the fuel tank (8) and the tank protection member (70).

5. The straddled vehicle according to any one of claims 1 to 4, wherein
a sound transmission space (GS1, GS2, GS3) that is formed so as to continuously extend from the intake port (11) of the air cleaner (10) to the opening (91) of the cover (90) while bypassing the shielding member (8, 70) is formed between the air cleaner (10) and the cover (90).

6. The straddled vehicle according to claim 5, wherein
the sound transmission space (GS1, GS2, GS3) includes a clearance space (GS2) located between the cover (90) and the shielding member (8, 70),
a partitioning portion (74) that partitions the clearance space (GS2) into a first space and a second space is provided at at least one (90) of the cover (90) and the shielding member (8, 70),
the first space is a space that communicates with a space above the cover (90) through the opening (91) of the cover (90), and
the second space is a space excluding the first space in the clearance space (GS2).

7. The straddled vehicle according to any one of claims 1 to 6, wherein a total opening area of the opening (91) of the cover (90) is equal to or smaller than a total opening area of the intake port (11) of the air cleaner (10).

8. The straddled vehicle according to any one of claims 1 to 7 wherein
the opening (91) of the cover includes a first opening and a second opening (91),
each of the first opening and the second opening (91) is formed such that at least part of each of the first opening (91) and the second opening (91) overlaps with the intake port (11) of the air cleaner (10) in a plan view, and
the shielding member (8, 70) is configured to overlap with at least part of the first opening (91) of the cover (90) in a plan view and is configured to overlap with at least part of the second opening (91) of the cover (90) in a plan view.

## Patentansprüche

1. Spreizsitz-Fahrzeug (100), das umfasst:
einen Motor (5);
einen Luftfilter (10), der oberhalb des Motors (5) vorhanden ist;
eine Abdeckung (90), die oberhalb des Luftfilters (10) so angeordnet ist, dass sie sich in einer Draufsicht in einer vertikalen Richtung mit wenigstens einem Teil des Luftfilters (10) überlappt;
wobei
der Luftfilter (10) einen Ansaugkanal (11) aufweist, der so ausgebildet ist, dass er sich nach oben öffnet, und in den dem Motor (5) zuzuführende Luft eingeleitet wird,
die Abdeckung (90) eine Öffnung (91) aufweist, die so ausgebildet ist, dass sich wenigstens ein Teil der Öffnung (91) in einer Draufsicht in der vertikalen Richtung mit dem Ansaugkanal (11) des Luftfilters (10) überlappt,
**dadurch gekennzeichnet, dass**
ein abschirmendes Element (8, 70) zwischen dem Luftfilter (10) und der Abdeckung (90) vorhanden ist, wobei das abschirmende Element so ausgeführt ist, dass es verhindert, dass die Tröpfchen in den Ansaugkanal eintreten, und
sich wenigstens ein Teil des abschirmenden Elementes (8, 70) in einer Draufsicht in der vertikalen Richtung mit einem gemeinsamen Öffnungsbereich (CR) überlappt, in dem der Ansaugkanal (11) des Luftfilters (10) und die Öffnung (91) der Abdeckung (90) einander überlappen.

2. Spreizsitz-Fahrzeug nach Anspruch 1, wobei
sich wenigstens ein Teil des abschirmenden Elementes (8, 70) in einer Draufsicht mit dem gesamten gemeinsamen Öffnungsbereich (CR) überlappt.

3. Spreizsitz-Fahrzeug nach Anspruch 1 oder 2, das des Weiteren umfasst:
einen Kraftstofftank (8), wobei
das abschirmende Element (8, 70) durch wenigstens einen Teil des Kraftstofftanks (8) gebildet wird.

4. Spreizsitz-Fahrzeug nach Anspruch 1 oder 2, das des Weiteren umfasst:
einen Kraftstofftank (8), sowie
ein Tank-Schutzelement (70), das den Kraftstofftank (8) schützt,
wobei
das abschirmende Element (8, 70) durch wenigstens einen Teil des Kraftstofftanks (8) und das Tank-Schutzelement (70) gebildet wird.

5. Spreizsitz-Fahrzeug nach einem der Ansprüche 1 bis 4,wobei
ein Schallübertragungs-Raum (GS1, GS2, GS3), der so ausgebildet ist, dass er sich durchgehend von dem Ansaugkanal (11) des Luftfilters (10) zu der Öffnung (91) der Abdeckung (90) erstreckt und dabei das abschirmende Element (8, 70) umgeht, zwischen dem Luftfilter (10) und der Abdeckung (90) ausgebildet ist.

6. Spreizsitz-Fahrzeug nach Anspruch 5, wobei
der Schallübertragungs-Raum (GS1, GS2, GS3) einen Zwischen-Raum (GS2) einschließt, der sich zwischen der Abdeckung (90) und dem abschirmenden Element (8, 70) befindet,
ein Unterteilungsabschnitt (74), der den Zwischen-Raum (GS2) in einen ersten Raum und einen zweiten Raum unterteilt, an der Abdeckung (90) oder/und dem abschirmenden Element (8, 70) vorhanden ist,
der erste Raum ein Raum ist, der über die Öffnung (91) der Abdeckung (90) mit einem Raum oberhalb der Abdeckung (90) in Verbindung steht, und
der zweite Raum ein Raum ist, der den ersten Raum in dem Zwischen-Raum (GS2) ausschließt.

7. Spreizsitz-Fahrzeug nach einem der Ansprüche 1 bis 6, wobei eine Gesamt-Öffnungsfläche der Öffnung (91) der Abdeckung (90) genauso groß ist wie oder kleiner als eine Gesamt-Öffnungsfläche des Ansaugkanals (11) des Luftfilters (10).

8. Spreizsitz-Fahrzeug nach einem der Ansprüche 1 bis 7, wobei
die Öffnung (91) der Abdeckung eine erste Öffnung und eine zweite Öffnung (91) einschließt,
die erste Öffnung und die zweite Öffnung (91) jeweils so ausgebildet sind, dass sich wenigstens ein Teil der ersten Öffnung (91) und der zweiten Öffnung (91) in einer Draufsicht jeweils mit dem Ansaugkanal (11) des Luftfilters (10) überlappt, und
das abschirmende Element (8, 70) so ausgeführt ist, dass es sich in einer Draufsicht mit wenigstens einem Teil der ersten Öffnung (91) der Abdeckung (90) überlappt, und so ausgeführt ist, dass es sich in einer Draufsicht mit wenigstens einem Teil der zweiten Öffnung (91) der Abdeckung (90) überlappt.

## Revendications

1. Véhicule à selle (100) comprenant :
un moteur (5) ;
un filtre à air (10) prévu au-dessus du moteur (5) ;
un couvercle (90) prévu au-dessus du filtre à air (10) de manière à chevaucher au moins une partie du filtre à air (10) dans une vue en plan vue dans la direction de haut en bas ;
dans lequel
le filtre à air (10) a un orifice d'admission (11) qui est formé de manière à s'ouvrir vers le haut et dans lequel l'air à fournir au moteur (5) est introduit,
le couvercle (90) a une ouverture (91) qui est formée de sorte qu'au moins une partie de l'ouverture (91) chevauche l'orifice d'admission (11) du filtre à air (10) dans une vue en plan vue dans la direction de haut en bas,
**caractérisé en ce que**
un élément faisant écran (8, 70) est prévu entre le filtre à air (10) et le couvercle (90), l'élément faisant écran est configuré pour empêcher des gouttelettes de pénétrer dans l'orifice d'admission, et
au moins une partie de l'élément faisant écran (8, 70) chevauche une région d'ouverture commune (CR) dans laquelle l'orifice d'admission (11) du filtre à air (10) et l'ouverture (91) du couvercle (90) se chevauchent dans une vue en plan vue dans la direction de haut en bas.

2. Véhicule à selle selon la revendication 1, dans lequel
au moins une partie de l'élément faisant écran (8, 70) chevauche la totalité de la région d'ouverture commune (CR) dans une vue en plan.

3. Véhicule à selle selon la revendication 1 ou 2, comprenant en outre
un réservoir de carburant (8), dans lequel
l'élément faisant écran (8, 70) est constitué par au moins une partie du réservoir de carburant (8).

4. Véhicule à selle selon la revendication 1 ou 2, comprenant en outre :
un réservoir de carburant (8) ; et
un élément de protection de réservoir (70) qui protège le réservoir de carburant (8), dans lequel
l'élément faisant écran (8, 70) est constitué par au moins une partie du réservoir de carburant (8) et l'élément de protection de réservoir (70).

5. Véhicule à selle selon l'une quelconque des revendications 1 à 4, dans lequel
un espace de transmission sonore (GS1, GS2, GS3) qui est formé de manière à s'étendre en continu depuis l'orifice d'admission (11) du filtre à air (10) jusqu'à l'ouverture (91) du couvercle (90) tout en contournant l'élément faisant écran (8, 70) est formé entre le filtre à air (10) et le couvercle (90).

6. Véhicule à selle selon la revendication 5, dans lequel
l'espace de transmission sonore (GS1, GS2, GS3) comprend un espace de dégagement (GS2) situé entre le couvercle (90) et l'élément faisant écran (8, 70),
une partie de division (74) qui divise l'espace de dégagement (GS2) en un premier espace et un second espace est prévue au niveau d'au moins l'un (90) du couvercle (90) et de l'élément faisant écran (8, 70),
le premier espace est un espace qui communique avec un espace au-dessus du couvercle (90) par l'ouverture (91) du couvercle (90), et
le second espace est un espace excluant le premier espace dans l'espace de dégagement (GS2).

7. Véhicule à selle selon l'une quelconque des revendications 1 à 6, dans lequel une surface d'ouverture totale de l'ouverture (91) du couvercle (90) est inférieure ou égale à une surface d'ouverture totale de l'orifice d'admission (11) du filtre à air (10).

8. Véhicule à selle selon l'une quelconque des revendications 1 à 7, dans lequel l'ouverture (91) du couvercle comprend une première ouverture et une seconde ouverture (91),
chacune de la première ouverture et de la seconde ouverture (91) est formée de sorte qu'au moins une partie de chacune de la première ouverture (91) et de la seconde ouverture (91) chevauche l'orifice d'admission (11) du filtre à air (10) dans une vue en plan, et
l'élément faisant écran (8, 70) est configuré pour chevaucher au moins une partie de la première ouverture (91) du couvercle (90) dans une vue en plan et est configuré pour chevaucher au moins une partie de la seconde ouverture (91) du couvercle (90) dans une vue en plan.
